# EUROPÄISCHE PATENTANMELDUNG

(11) **EP 2 893 967 A1**
(43) Veröffentlichungstag der Anmeldung: **15.07.2015**
(21) Anmeldenummer: 14150713.7
(22) Anmeldetag: 10.01.2014
(51) Int. Cl.: B01D 53/04, B01D 53/86, B01D 53/88, B08B 15/02, F24C 15/20

(54) **Vorrichtung und Verfahren zur Beseitigung von Gerüchen**

(71) Anmelder: Berbel Ablufttechnik GmbH, 48432 Rheine (DE)
(72) Erfinder: Gatzmanga, Heinz, 06366 Köthen (DE); Scholz, Berthold, 48496 Hopsten (DE); Ahlmer, Peter, 64367 Mühltal (DE)
(74) Vertreter: Vossius, Corinna

(57) **Zusammenfassung**

Die Erfindung geht aus von einer Vorrichtung zur Beseitigung von Gerüchen aus der Abluft einer Abluftquelle mit einem Filtergehäuse (2), welches eine Abluftzufuhr (4) und eine Abluftabfuhr (3) aufweist, und mit einem Filter (16), der das Filtergehäuse (2) in wenigstens einen ersten Raum (19) in Strömungsrichtung der Abluft vor dem Filter (16) und wenigstens einen zweiten Raum (20) nach dem Filter (16) unterteilt. Erfindungsgemäß weist die Vorrichtung auf
einen Katalysator (13) in einem der Räume (19; 20) auf einer Seite des Filters (16),
einen Verbindungskanal (11), über den der Katalysator (13) mit dem anderen Raum (19; 20) auf der anderen Seite des Filters (16) in Verbindung steht,
eine Gasfördereinrichtung (12), über die ein Luftkreislauf aufbaubar ist, in den der Filter (16), die beiden Räume (19, 20) auf beiden Seiten des Filters (16), der Verbindungskanal (11) und der Katalysator (13) eingebunden sind, und
eine Steuerung (23), mit der die Gasfördereinrichtung (12) ansteuerbar ist.

## Beschreibung

Die Erfindung betrifft eine Vorrichtung und ein Verfahren zur Beseitigung von Gerüchen nach dem Oberbegriff von Anspruch 1 bzw. Anspruch 10.

Um Abluft und Gerüche insbesondere aus Küchen zu entfernen, werden Dunstabzugshauben verwendet, so dass die dort entstandenen Kochdünste und die damit verbundenen Gerüche abgeführt werden können. Derartige Dunstabzugshauben weisen in der Regel eine Abscheideeinrichtung zur Abscheidung fester und flüssiger Bestandteile und eine Gebläseeinrichtung zur Erzeugung eines Luftstroms auf. Die Abscheidung der Schmutzpartikel kann mittels Abscheidungselementen, wie beispielsweise auswaschbaren Fettfiltern oder aber durch eine geeignete Führung des Luftstroms erfolgen. Die Abscheideeinrichtung entfernt aus der Abluft nahezu alle enthaltenen festen und flüssigen Bestandteile, wie Fetttröpfchen, Schmutzpartikel und auskondensiertes Wasser, bevor die Abluft in die Gebläseeinrichtung eintritt. Solche Dunstabzugshauben können in zwei Kategorien eingeteilt werden:
Bei den so genannten Ablufthauben wird die Abluft über eine Rohr- oder Schlauchleitung nach außen geführt und so dem Raum entzogen, in dem sich die Kochstelle und die Dunstabzugshaube befinden. Dabei wird die mit Gerüchen belastete Abluft an die Atmosphäre außerhalb des Gebäudes abgegeben. Um die Gebläseeinrichtung sauber zu halten, ist eine Abscheideeinrichtung aber üblicherweise auch bei Ablufthauben vorgesehen. Mit dieser Kategorie von Dunstabzugshauben lassen sich Geruchsbelästigungen und Schmutzablagerungen im Kochraum und im Gebäude insgesamt vermeiden. nUm die Abluft nicht nur von festen und flüssigen Bestandteilen, sondern auch von Gerüchen Um die Abluft nicht nur von festen und flüssigen Bestandteilen, sondern auch von Gerüchen befreien zu können, ist bei den so genannten Umlufthauben häufig ein zusätzlicher Geruchsfilter vorgesehen, der es ermöglicht, die Abluft praktisch "geruchslos" wieder in den Raum zurückführen zu können. Derartige Geruchsfilter enthalten meist Aktivkohle, die eine sehr große amorphe innere Oberfläche aufweist und daher eine große Menge an Geruchsmolekülen adsorbieren kann.

Diese Geruchsfilter sind jedoch nur für eine begrenzte Menge an Geruchsstoffen aufnahmefähig. Ist die innere Oberfläche der Geruchsfilter bis zu einem bestimmten Grad belegt und daher nicht weiter aufnahmefähig, müssen die Geruchsfilter getauscht werden. Im Normalbetrieb ist so ein Tausch, je nach Größe des Filters, im Abstand von einigen Monaten oder zumindest einigen Jahren notwendig. Das kann zu einer erheblichen finanziellen Belastung führen.

Um einen regelmäßigen Tausch von Geruchsfiltern vermeiden zu können, wurde zur Eliminierung der Gerüche in der Abluft auch bereits UV-Strahlung eingesetzt. Es hat sich jedoch herausgestellt, dass bei dieser Behandlung der Abluft Ozon entsteht und insbesondere in kleineren Räumen die zulässige Ozonbelastung sehr schnell überschritten wird.

Es wurde auch bereits versucht, anstatt eines Geruchsfilters einen Katalysator zu verwenden, um die Geruchsstoffe zu zerstören. Bei den üblichen Volumenströmen von 300 bis 1000 m³ pro Stunde sind Katalysator-Temperaturen von ca. 300°C oder mehr notwendig. Es sind folglich erhebliche Maßnahmen nötig, die den Brandschutz gewährleisten. Andererseits muss auch die Abluft auf eine hohe Temperatur gebracht werden, so dass diese Methode auch aus energetischer Sicht kritisch zu beurteilen ist.

Es wurden aber auch schon Photo-Katalysatoren eingesetzt, die auch bei niedrigerer Temperatur die Geruchsstoffe in den großen Volumenströmen zerstören. Allerdings werden solche Photokatalysatoren wiederum über UV-Strahlung initiiert, so dass die Ozon-Konzentration in der Raumluft schnell die zulässigen Grenzwerte überschreitet.

Der Erfindung liegt die Aufgabe zugrunde, eine Vorrichtung und ein Verfahren zur Beseitigung von Gerüchen so auszugestalten, dass der häufige Austausch von Geruchsfiltern vermieden werden kann. Weiterhin sollen keine teuren Brandschutzvorkehrungen notwendig werden und eine Ozonkontamination der Raumluft oberhalb der geltenden Grenzwerte soll verhindert werden.

Gelöst wird die Aufgabe gemäß der Erfindung durch eine Vorrichtung und ein Verfahren zur Beseitigung von Gerüchen mit den Merkmalen von Anspruch 1 bzw. von Anspruch 10. Durch das Vorhandensein eines Katalysators, wenigstens eines Verbindungskanals, über den der Katalysator mit einem der Räume in Verbindung steht, einer Gasfördereinrichtung, über die ein geschlossener Luftkreislauf aufbaubar ist, in den der Filter, die beiden Räume auf beiden Seiten des Filters, der wenigstens eine Verbindungskanal und der Katalysator eingebunden sind und einer Steuerung, mit der die Gasfördereinrichtung ansteuerbar ist, lässt sich der Filter in herkömmlicher Weise dazu verwenden, Geruchsstoffe zu adsorbieren und so der Abluft zu entziehen, wobei der Filter aber innerhalb der Vorrichtung regeneriert werden kann. Die Vorrichtung ist insbesondere als Dunstabzugshaube ausgebildet.

Während des normalen Betriebs einer Dunstabzugshaube muss also kein Katalysator verwendet werden, um die Geruchsstoffe der Abluft zu entziehen, da diese Funktion in herkömmlicher Weise durch den Filter erledigt wird. Der Katalysator dient lediglich dazu, den Filter zu regenerieren. Die Luftmenge, die hierzu über den Katalysator geleitet werden muss, ist wesentlich geringer als die Luftmenge, die den Filter während des Normalbetriebs einer Umlufthaube durchströmt. Es ist daher ein relativ kleiner Katalysator ausreichend.

Als Gasfördereinrichtung kann beispielsweise ein Axial-, Radial- oder Tangentialgebläse eingesetzt werden. Axial-Gebläse können bei niedriger Drehzahl ein relativ großes Volumen fördern, so dass sie besonders klein aufgebaut werden können und im Betrieb sehr leise sind.

Die erfindungsgemäße Vorrichtung kann als separates Bauteil ausgebildet sein, welches beispielsweise bei anderen Dunstabzugshauben nachgerüstet werden kann, sie kann aber auch in eine Dunstabzugshaube integriert sein. In diesem Fall kann ein Teil des Gehäuses der Dunstabzugshaube zumindest als Teil des Gehäuses der Vorrichtung ausgebildet sein.

Weitere Einzelheiten und Vorteile der Erfindung ergeben sich aus den Unteransprüchen.

Der Katalysator soll die aus dem Filter ausgetriebenen Geruchsstoffe in einer überschaubaren Zeitspanne zerstören. Weiterhin soll der Katalysator nur so groß sein, dass er in einer gewöhnlichen Dunstabzugshaube untergebracht werden kann, ohne die normale Funktion beim Absaugen und Filtern der Abluft zu behindern. Es ist deshalb eine Heizung vorgesehen, die durch die Steuerung ansteuerbar ist. Über die Steuerung wird es möglich, die Heizung nur dann zu aktivieren, wenn der Filter regeneriert werden soll. Die Heizung ist idealerweise so ausgelegt, dass der Katalysator auf eine Temperatur zwischen 100 und 250°C, also auf eine Temperatur unterhalb des Flammpunkts von Öl (ca. 316°C) aufgeheizt wird. Idealerweise wird der Katalysator auf 160°C aufgeheizt. Die Leistung der Heizung ist an den Volumenstrom angepasst, den die Gasfördereinrichtung erzeugt. Da dieser Volumenstrom wesentlich geringer ist als der Volumenstrom, der während des normalen Absaugbetriebs durch den Filter geführt wird, ist hier eine relativ geringe Heizleistung ausreichend. Die Heizung wird nicht nur dazu verwendet, den Katalysator auf eine Temperatur zu bringen, die die Geschwindigkeit der Katalyse an die gegebenen Bedingungen anpasst, sondern sie wird auch dazu benutzt, die Luft, die durch den Filter geleitet wird, soweit aufzuheizen, dass die in dem Filter adsorbierten Geruchsstoffe desorbiert und aus dem Filter ausgetrieben werden. Hierzu muss die den Filter durchdringende Luft eine Temperatur von mindestens 60°C aufweisen.

Da die Katalyse der Geruchsstoffe nicht während des Normalbetriebs der Dunstabzugshaube stattfinden soll, ist ein separater kleiner Luftkreislauf durch den Filter vorgesehen. Um diesen Luftkreislauf nach außen abschließen zu können, ist ein Verschluss für die Abluftabfuhr vorgesehen. Da nach einem Verschließen der Abluftabfuhr nur noch die Abluftzufuhr geöffnet ist, kann sich über die Gasfördereinrichtung, den Verbindungskanal, den Filter und den Katalysator ein Luftkreislauf aufbauen, ohne dass dabei größere Mengen an Luft durch die Abluftzufuhr zuströmen oder entweichen.

In einem Ausführungsbeispiel der Erfindung wird der Verschluss über einen Aktuator in seine Verschluss- oder Öffnungsstellung bewegt. In diesem Fall ist der Verschluss durch die Steuerung ansteuerbar. Die Steuerung setzt zur Regeneration des Filters folglich aktiv die Gasfördereinrichtung in Betrieb, schließt die Abluftabfuhr und aktiviert die Heizung.

In einem anderen Ausführungsbeispiel ist ein Verschluss für die Abluftabfuhr vorgesehen, der nur öffnet, wenn während des Absaugbetriebs der Dunstabzugshaube der entsprechende Volumenstrom durch den Filter geführt wird. Hierzu kann der Verschluss beispielsweise schwenkbar angebracht sein, wobei die Schließkraft über das Gewicht des Verschlusses oder über einen beliebigen Kraftspeicher, z. B. eine Feder erzeugt wird. Sobald die auf den Verschluss wirkende Kraft, die durch den Volumenstrom beim Normalbetrieb generiert wird, größer als die Schließkraft wird, öffnet der Verschluss. Der geringe Volumenstrom während der Regeneration des Filters erzeugt dagegen nur eine geringe Kraft, die nicht ausreicht, die Schließkraft zu überwinden und den Verschluss in seine Offenstellung zu bewegen.

Um den Volumenstrom während des Normalbetriebs der Dunstabzugshaube möglichst wenig zu behindern und ihm wenig Widerstand entgegenzusetzen, soll der Filter eine möglichst große Querschnittsfläche aufweisen. Andererseits soll möglichst wenig Platz für den Filter und den Katalysator zur Regeneration des Filters verbraucht werden. Vorteilhaft ist der Filter deshalb in Form eines Satteldachs aufgebaut, wobei der wenigstens eine erste Raum unter dem Dach und der wenigstens eine zweite Raum über dem Dach angeordnet ist. Der Katalysator ist dabei in dem wenigstens einen ersten Raum unter dem Dach vorgesehen.

Der Firstwinkel, den die beiden Filterflächen miteinander einschließen, beträgt vorteilhaft zwischen 20 und 40°, insbesondere 28°. Durch die dachartige Anordnung entsteht eine große Querschnittsfläche. Der Katalysator findet unter dem Filterdach Platz und verbraucht auf diese Weise keinen zusätzlichen Raum.

Besonders vorteilhaft ist der Katalysator in einem Rohr untergebracht. Insbesondere ist in dem Rohr ein wabenförmiger Grundkörper vorgesehen, der mit Palladium beschichtet ist. Es lässt sich auf diese Weise eine große katalytisch wirkende Fläche realisieren. Der in dem Rohr untergebrachte Katalysator ist ein schon seit längerer Zeit für andere Einsatzzwecke bewährtes Bauteil, welches einfach zu handhaben und unempfindlich gegen Beschädigungen bei der Montage ist.

Die Katalysatorheizung sollte so gewählt werden, dass keine bauliche Veränderung an dem Katalysator selbst vorgenommen werden muss. So ist es beispielsweise möglich, den Katalysator indirekt über die hindurch strömende Luft aufzuheizen. Hierzu ist die Luft zu beheizen, bevor sie den Katalysator durchströmt. Die Luft muss in diesem Fall aber auf eine relativ hohe Temperatur gebracht werden, wenn der Katalysator über die Luft auf eine Arbeitstemperatur im Bereich von etwa 100-250°C gebracht werden soll.

Vorteilhaft wird deshalb die Heizung als Heizmanschette ausgebildet, die um den Katalysator gelegt ist, wobei der Katalysator insbesondere auf 120-180°C aufheizbar ist. Die Arbeitstemperatur des Katalysators ist abhängig von der katalytisch wirkenden Fläche und von dem Volumenstrom an zu behandelnder Luft. Bei einem zu behandelnden Volumenstrom von ca. 50 m³ pro Stunde reicht bei dem verwendeten Katalysator eine Arbeitstemperatur von ca. 160°C aus, um die Geruchsstoffe zerstören zu können. Um den Katalysator bei einem Regenerationsstrom von 50 m³ pro Stunde entsprechend aufzuheizen, ist eine Heizleistung von etwa 70 Watt erforderlich.

Um einen möglichst einfachen Aufbau der Vorrichtung gewährleisten zu können, ist die Gasfördereinrichtung vorzugsweise zwischen dem Katalysator und dem Verbindungskanal vorgesehen. Der Katalysator kann so an der Gasfördereinrichtung und diese an der Wandung des Kanals befestigt werden. Für die Montage können Gasfördereinrichtung und Katalysator, vorzugsweise mit Heizmanschette, vormontiert werden, bevor diese Baugruppe dann in die Vorrichtung eingesetzt wird. Auch ist der elektrische Anschluss von Heizmanschette und Gasfördereinrichtung auf diese Weise einfacher zu gestalten.

Der Filter sollte eine möglichst große innere Oberfläche aufweisen, so dass eine große Menge an Geruchsstoffen adsorbiert werden kann. Vorteilhaft enthält der Filter deshalb Aktivkohle. Da der Filter dachartig ausgebildet sein soll, benötigt er weiterhin eine stabile Struktur. Er ist deshalb besonders vorteilhaft aus kleinen, miteinander verschmolzenen Polyolefin-Kügelchen aufgebaut, die mit Aktivkohle beschichtet sind. Auf diese Weise ist eine große innere Oberfläche und eine stabile Struktur gewährleistet.

Bei dem erfindungsgemäßen Verfahren wird der Filter über einen geschlossenen Kreislauf regeneriert, bei dem Luft, die auf insbesondere 50-70°C aufgeheizt ist, aus wenigstens einem Raum auf einer Seite des Filters durch den Filter hindurch in den wenigstens einen Raum auf der anderen Seite des Filters und über wenigstens einen Verbindungskanal zwischen den Räumen wieder zurück gefördert wird, wobei die Luft über einen Katalysator geführt wird, der insbesondere auf einer Temperatur zwischen 120°C und 180°C gehalten wird. Die Luft wird dabei zwangsweise mit Hilfe einer Gasfördereinrichtung bewegt, so dass eine zufällige und unkontrollierte thermische Zirkulation ausgeschlossen werden kann. Vorteilhaft ist die durch den Filter geförderte Luft auf 60°C aufgeheizt.

Während des Normalbetriebs wird der Filter in Strömungsrichtung der zu reinigenden Abluft belastet. Das bedeutet, dass der Filter an der Seite, an der die zu reinigende Abluft eintritt, am meisten und an der Seite, an der die gereinigte Abluft wieder austritt, am wenigsten mit Geruchsstoffen besetzt ist. Es bieten sich nun grundsätzlich zwei Möglichkeiten zur Regeneration des Filters an.

Bei einem ersten Ausführungsbeispiel wird zur Regeneration des Filters Luft aus dem wenigstens einen ersten Raum über den Verbindungskanal in den wenigstens einen zweiten Raum abgezogen und durch den Filter dem wenigstens einen ersten Raum wieder zugeführt. Die Richtung des Volumenstroms zur Regeneration des Filters ist damit entgegengesetzt zu der Richtung des Volumenstroms zur Reinigung der Abluft während des Normalbetriebs der Dunstabzugshaube. Dadurch liegen die am stärksten belasteten Bereiche des Filters an der Ausgangsseite des Volumenstroms zur Regeneration des Filters.

Das bedeutet, dass die Geruchsstoffe aus den am stärksten belasteten Bereichen des Filters schnell desorbiert werden und den Filter auf dem schnellsten Wege verlassen. Sie müssen dabei nicht Bereiche des Filters passieren, die möglicherweise noch unbelastet sind. Auf diese Weise ist folglich eine sehr schnelle Regeneration des Filters möglich.

In einem zweiten Ausführungsbeispiel wird dagegen Luft aus dem wenigstens einen zweiten Raum über den Verbindungskanal in den wenigstens einen ersten Raum abgezogen und durch den Filter dem wenigstens einen zweiten Raum wieder zugeführt. Auf diese Weise verläuft der Volumenstrom zur Regeneration des Filters in der gleichen Richtung wie der Volumenstrom der zu reinigenden Abluft.

Bei diesem Ausführungsbeispiel kann der Luftweg so aufgebaut werden, dass er sich in einer Richtung strömungstechnisch einem Optimum annähert, ohne dass dabei auf eine Richtungsumkehr Rücksicht genommen werden müsste. Diese strömungstechnische Optimierung führt auch zu einer sehr geringen Geräuschentwicklung sowohl während der Reinigung der Abluft im Normalbetrieb als auch während der Regeneration des Filters. Bei diesem Ausführungsbeispiel kann auch die Gasfördereinrichtung geringer dimensioniert werden, da die Gasfördereinrichtung durch eine Konvektion unterstützt wird, die die erwärmte Luft aus dem Katalysator und aus dem Umfeld der Heizmanschette nach oben bewegt und durch den Filter drückt.

Der Katalysator ist so dimensioniert, dass bei einem Volumenstrom zur Regeneration des Filters mit ca. 50 m³ pro Stunde und einer Katalysatortemperatur von ca. 120-180°C eine Beseitigung der Geruchsstoffe aus dem Volumenstrom gewährleistet ist. Der Katalysator ist folglich nicht darauf ausgelegt, Gerüche aus einem wesentlich größeren Volumenstrom zu entfernen. Der Kreislauf zur Regeneration des Filters wird deshalb vorteilhaft nur dann angesteuert, wenn keine Gerüche aus der Abluft einer Abluftquelle entfernt werden. Die Regeneration des Filters wird also nicht während des Normalbetriebs der Dunstabzugshaube, sondern nur in den Arbeitspausen, z. B. nachts in einem festgelegten Zeitfenster aktiviert.

Da für die Regeneration des Filters Energie für die Heizmanschette und die Gasfördereinrichtung verbraucht wird, soll die Regeneration nur dann aktiviert werden, wenn der Filter entsprechend kontaminiert und eine Regeneration nötig ist. Vorteilhaft wird der Kreislauf zur Regeneration des Filters deshalb erst dann angesteuert, wenn im Normalbetrieb ein bestimmtes Volumen der Abluft einer Abluftquelle gefiltert wurde. Es werden also beispielsweise die Betriebsstunden in den unterschiedlichen Leistungsstufen der Dunstabzugshaube bzw. die durchgesetzten Volumenströme registriert und die Regeneration des Filters wird dann aktiviert, wenn ein bestimmtes gefiltertes Volumen an Abluft überschritten wird.

In einer anderen Ausführungsform ist in Strömungsrichtung hinter dem Filter ein entsprechender Geruchssensor vorgesehen. Über diesen Geruchssensor lässt sich ermitteln, wann der Filter kontaminiert ist und Geruchsstoffe nicht mehr aufgenommen werden können. Bei dieser Ausführungsform wird der Regenerationsbetrieb gestartet, wenn die Menge der über den Geruchssensor festgestellten Geruchsstoffe oder der prozentuale Anteil der Geruchsstoffe in dem den Filter passierenden Volumenstrom einen festgelegten Schwellwert überschreitet.

Wird während der Regeneration des Filters die Dunstabzugshaube in Betrieb genommen, also in den Normalbetrieb geschaltet, würde es zu einer Überlastung des Katalysators kommen und die Regeneration wäre nicht von Erfolg gekrönt. Besonders vorteilhaft wird deshalb ein bereits begonnener Kreislauf zur Regeneration des Filters unterbrochen, wenn Gerüche aus der Abluft einer Abluftquelle im Normalbetrieb entfernt werden. Sobald dann der Normalbetrieb der Dunstabzugshaube wieder beendet wird, kann mit der Regeneration des Filters fortgefahren werden.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine perspektivische Ansicht einer erfindungsgemäßen Vorrichtung,
- Fig. 2: eine Seitenansicht der Vorrichtung nach Fig. 1,
- Fig. 3: einen Schnitt entsprechend der Pfeile B-B in Fig. 2,
- Fig. 4: einen Schnitt entsprechend der Pfeile A-A in Fig. 2,
- Fig. 5: ein Detail eines Schnittes entsprechend der Pfeile D-D in Fig. 2
- Fig. 6: eine perspektivische Darstellung eines Schnitts in Richtung der Pfeile C-C in Fig. 3 und
- Fig. 7: eine rein schematische Darstellung der erfindungsgemäßen Vorrichtung.

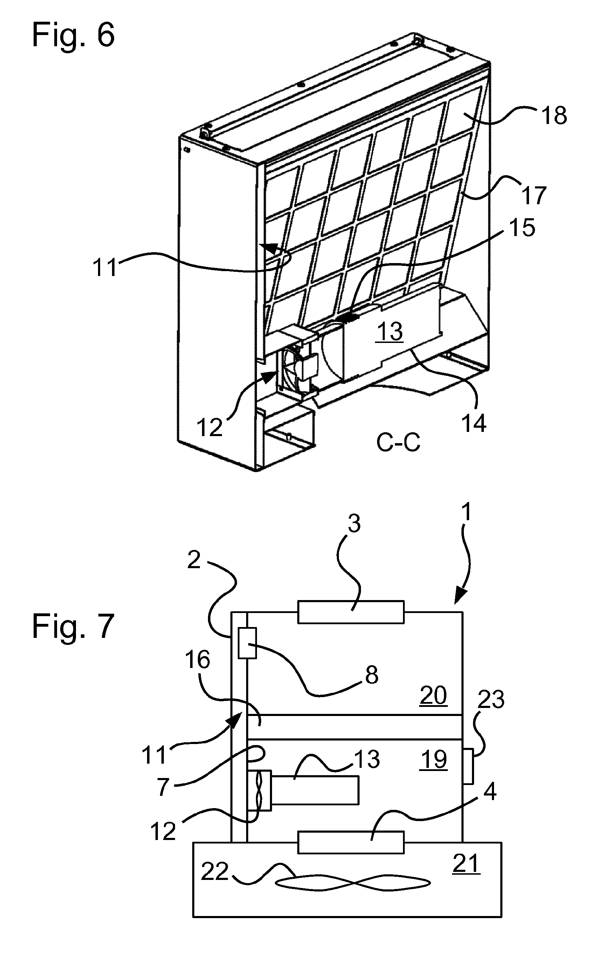

Das Prinzip der Erfindung soll zuerst an der schematischen Darstellung in Fig. 7 erläutert werden. Der Dunstabzug 21 mit dem Hauptgebläse 22 ist Teil einer handelsüblichen Dunstabzugshaube, die entweder als Abluft- oder als Umlufthaube ausgeführt sein kann. In beiden Fällen ist unterhalb des Hauptgebläses 22 üblicherweise ein Fettfilter oder eine Fettabscheidung (hier nicht dargestellt) vorgesehen, so dass der Abluftstrom von festen und flüssigen Bestandteilen befreit wird, bevor er das Hauptgebläse 22 durchströmt und dann entweder nach außen gelangt oder über einen Geruchsfilter wieder in den Raum rückgeführt wird.

In Fig. 7 ist die Dunstabzugshaube als Umlufthaube ausgeführt. Der Geruchsfilter 1 ist dazu über seine Abluftzufuhr 4 direkt mit dem Dunstabzug 21 verbunden. Dunstabzug 21 und Geruchsfilter 1 können als ein Gerät ausgeführt sein und sich in einem gemeinsamen Gehäuse befinden. Es ist aber ebenso möglich, den Geruchsfilter 1 als eigenständiges Gerät auszubilden, so dass beispielsweise eine Ablufthaube auf eine Umlufthaube umgerüstet werden kann. Bei einer hier nicht gezeigten Ausführungsform kann das Hauptgebläse 22 - in Strömungsrichtung gesehen - auch nach dem Geruchsfilter 1 angeordnet werden. Bei dieser Ausführungsform wird das Hauptgebläse oft in einem anderen Raum oder an der Außenwand des Hauses angebracht, um den Geräuschpegel in dem Raum zu reduzieren, in dem sich die Dunstabzugshaube befindet.

Der eigentliche Filter 16 ist hier schematisch als horizontal eingebaute Filtermatte oder als Filterbett mit losem Filtermaterial dargestellt. Sie unterteilt das Gehäuse 2 des Geruchsfilters 1 in einen ersten Raum 19 in Strömungsrichtung der Abluft vor und einen zweiten Raum 20 hinter dem Filter 16. Durch eine Seitenwand des Gehäuses 2 und eine Innenwand 7 wird ein Verbindungskanal 11 geschaffen, der einen Bypass zu dem Filter 16 zwischen dem ersten 19 und dem zweiten Raum 20 bildet. Der Verbindungskanal 11 steht mit dem ersten Raum 19 über einen Axial-Lüfter 12 sowie einen Katalysator 13 und mit dem zweiten Raum 20 über Öffnungen 8 der Innenwand 7 in Verbindung. Auch der Axial-Lüfter 12 ist über eine hier allerdings nicht dargestellte Öffnung der Innenwand 7 mit dem Verbindungskanal 11 verbunden.

Während des Normalbetriebs des Dunstabzugs 21 tritt die bereits von flüssigen und festen Bestandteilen befreite Abluft über die Abluftzufuhr 4 aus dem Dunstabzug 21 in den ersten Raum 19 des Geruchsfilters 1 ein. Durch das Hauptgebläse 22 baut sich vor dem Filter 16 ein leichter Überdruck auf, der dazu führt, dass die Abluft durch den Filter 16 in den zweiten Raum 20 gedrückt wird. Dabei werden Geruchsstoffe - normalerweise gasförmige organische Bestandteile des Abluftstroms - der Abluft entzogen und in dem Filter 16 festgehalten. Die von den Geruchsstoffen befreite Abluft wird über die Abluftabfuhr 3 wieder dem Raum zurückgegeben. Während des Normalbetriebs sind die Öffnungen 8 geschlossen, so dass keine Abluft durch den Verbindungskanal 11 an dem Filter 16 vorbei von dem ersten Raum 19 in den zweiten Raum 20 gelangen kann.

Nach einer größeren Anzahl von Betriebsstunden ist der Filter 16 gesättigt, kann keine Geruchsstoffe mehr aufnehmen und müsste ausgetauscht werden. Bisher wurde in diesen Fällen entweder ein neuer Filter eingesetzt oder der gesättigte Filter wurde zum Regenerieren ausgebaut. Diese Regeneration konnte bei Spezialfirmen durchgeführt werden und war üblicherweise günstiger als ein neuer Filter.

Bei der externen Regeneration durch Spezialfirmen wurde der Filter erwärmt, so dass die adsorbierten Geruchsstoffe wieder desorbiert werden. Gleichzeitig wurde der Filter von unbelasteter Luft durchströmt, so dass die desorbierten Geruchsstoffe mitgerissen und aus dem Filter entfernt wurden. Die mitgerissenen Geruchsstoffe wurden dann meist durch starke Hitze oxidiert und zerstört.

In die erfindungsgemäße Vorrichtung ist nun eine interne Filterregeneration integriert. Um die interne Regeneration zu starten, wird die Abluftabfuhr 3 geschlossen, das Hauptgebläse 22 gestoppt und der Axial-Lüfter 12 über die Steuerung 23 in Betrieb gesetzt. Bevorzugt wird dem zweiten Raum 20 Abluft über den Verbindungskanal 11 entzogen und über den Katalysator 13 dem ersten Raum 19 zugeführt. Dadurch entsteht in dem zweiten Raum 20 ein leichter Unterdruck und im ersten Raum 19 ein leichter Überdruck, wodurch die Luft im Kreislauf durch den Filter 16 geführt wird.

Über eine Heizmanschette 15 wird sowohl der Katalysator 13 als auch die im Kreislauf geführte Luft erwärmt. Je wärmer die durch den Filter 16 strömende Luft wird, desto stärker werden die in dem Filter 16 adsorbierten Geruchsstoffe desorbiert. Durch das Aufheizen der Luft im Katalysator 13 und die Abkühlung des Volumenstroms beim Filterdurchgang und in dem Verbindungskanal 11 stellt sich nach einiger Zeit ein Gleichgewicht ein, bei dem die vor dem Filter 16 anstehende Luft eine Temperatur von ca. 60°C aufweist.

Die desorbierten Geruchsstoffe werden von der zirkulierenden Luft bei deren Durchgang durch den Filter 16 mitgenommen und über den Verbindungskanal 11 und den Axial-Lüfter 12 dem Katalysator 13 zugeführt. Der Katalysator 13 wird über die Heizmanschette 15 auf eine Temperatur von ca. 160°C erwärmt und ist dann in der Lage, die Geruchsstoffe zu zerstören. Der Katalysator 13 ist so dimensioniert, dass bei Erreichen der angegebenen Temperatur ein Volumenstrom von ca. 50 m³ pro Stunde gereinigt werden kann. Nach dem Passieren des Katalysators 13 wird die nun von Geruchsstoffen befreite Luft wiederum durch den Filter 16 gedrückt, wo sie erneut desorbierte Geruchsstoffe aufnehmen kann.

Die Steuerung 23 startet die Regenerierung nur dann, wenn der Dunstabzug 21 nicht im Normalbetrieb läuft, also ausgeschaltet ist. Bei einem bevorzugten Ausführungsbeispiel der Erfindung zählt die Steuerung 23 die Volumeneinheiten, die der Filter 16 im Normalbetrieb gefiltert hat. Bei einem voreingestellten Schwellwert wird zu einer ebenfalls voreingestellten Uhrzeit die Regeneration gestartet. Während der Regeneration wird der Zähler ständig nach unten korrigiert, so dass der Zählerstand immer der aktuellen Beladung des Filters mit Geruchsstoffen entspricht. Auf diese Weise steht der Zähler auf Null wenn alle Geruchsstoffe aus dem Filter desorbiert und durch den Katalysator zerstört wurden. Die Regeneration wird zu diesem Zeitpunkt beendet.

Wird während der Regeneration der Dunstabzug eingeschaltet, wird die Regeneration abgebrochen. Der Zähler besitzt dann einen Zählerstand, der wiederum der aktuellen Beladung des Filters entspricht. Bei einem möglichen Ausführungsbeispiel wird die Regeneration wieder aufgenommen, sobald der Normalbetrieb des Dunstabzugs wieder gestoppt wird. Auch hier ist die Regeneration beendet, wenn der Zählerstand Null erreicht ist.

Bei einem anderen Ausführungsbeispiel wird die Regeneration nach der Unterbrechung erst dann wieder aufgenommen, wenn der voreingestellte Schwellwert erneut erreicht ist. Das bedeutet aber gegenüber dem ersteren Ausführungsbeispiel eine geringere Laufzeit bis zur nächsten Regeneration.

Der in der Steuerung 23 hinterlegte Schwellwert entspricht der Anzahl an Volumeneinheiten, die mindestens gefiltert werden können, ohne dass Geruchsstoffe den Filter durchdringen und wieder an die Raumluft abgegeben werden. Die Volumeneinheiten lassen sich über die eingeschalteten Leistungsstufen und die Betriebsstunden eruieren. Es ist in der Steuerung 23 aber auch eine Formel oder eine Tabelle hinterlegt, aus der hervorgeht, wie sich die Beladung des Filters mit fortschreitender Regeneration verringert.

Es ist ebenso möglich, in dem zweiten Raum 20 einen oder mehrere Sensoren vorzusehen, die detektieren, wenn Geruchsstoffe den Filter durchdringen. Bei diesem Ausführungsbeispiel kann die Regeneration gestartet werden, wenn Geruchsstoffe den Filter durchdringen und die Aufnahmekapazität des Filters tatsächlich überschritten ist. Ebenso kann die Regeneration gestoppt werden, sobald keine desorbierten Geruchsstoffe mehr detektiert werden. Es müsste in diesem Fall kein auf den Filter abgestimmtes Modell in der Steuerung hinterlegt werden.

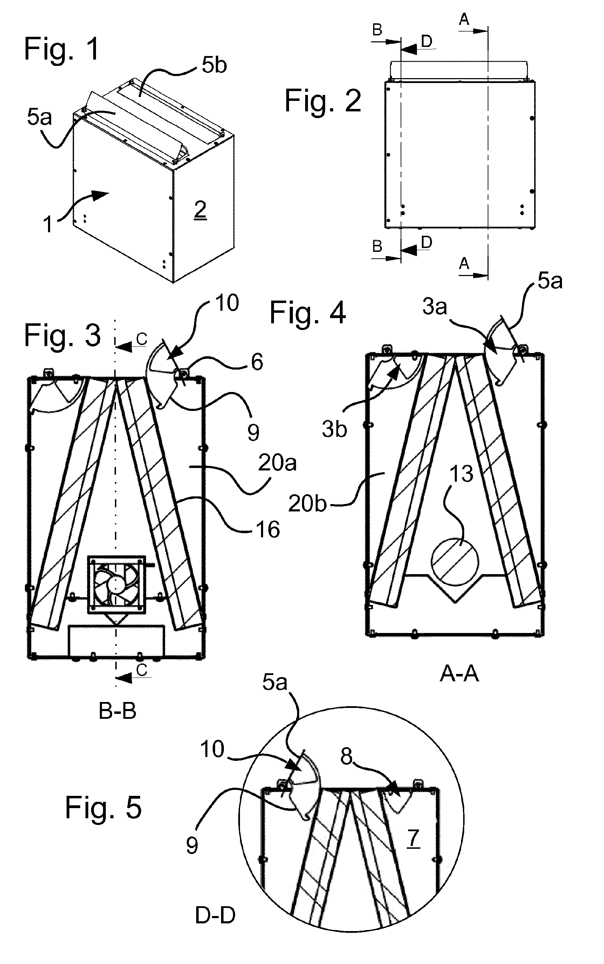

Anhand der Figuren 1 bis 6 soll im Folgenden ein besonders bevorzugtes Ausführungsbeispiel der erfindungsgemäßen Vorrichtung erläutert werden. Fig. 1 zeigt das Gehäuse 2 des Geruchsfilters 1 in perspektivischer Darstellung. Erkennbar sind zwei Verschlussklappen 5a und 5b, die schwenkbar an dem Gehäuse 2 befestigt sind. Zum besseren Verständnis ist die Verschlussklappe 5a offen und die Verschlussklappe 5b geschlossen dargestellt.

Fig. 2 dient der Darstellung der Schnittansichten, die in den Figuren 3 bis 5 gezeigt sind. Der Schnitt B-B in Fig. 3 liegt zwischen dem Verbindungskanal 11 und dem Axial-Lüfter 12, so dass das Lüfterrad sichtbar ist. Der Schnitt A-A in Fig. 4 führt dagegen direkt durch den Katalysator 13, so dass von dem Axial-Lüfter 12 hier nichts sichtbar ist.

Aus beiden Schnitten geht hervor, dass der Filter 16 dachartig angeordnet ist, so dass eine möglichst große effektive Filterfläche zur Verfügung steht. Der Winkel, der von den beiden geraden Filterflächen eingeschlossen wird, beträgt etwa 28° und gewährleistet dadurch eine große effektive Filterfläche bei geringem Raumbedarf. Da der zweite Raum 20 bei dieser Filterform in die Räume 20a und 20b unterteilt ist, muss für jeden der beiden Räume eine eigene Abluftabfuhr 3a bzw. 3b vorgesehen sein. Jede Abluftabfuhr 3a bzw. 3b kann durch eine Verschlussklappe 5a bzw. 5b geschlossen werden. Die beiden Verschlussklappen sind identisch ausgebildet und jeweils über ein seitliches Scharnier 6 mit dem Gehäuse 2 verbunden.

Die beiden Verschlussklappen 5a, 5b schließen entweder durch ihr Eigengewicht oder werden beispielsweise durch eine hier nicht gezeigte Feder in die Verschlussstellung gezogen. In beiden Fällen ist die Schließkraft so dimensioniert, dass die Schließkraft erst dann überwunden wird, wenn das Hautgebläse 22 auf niedrigster Stufe eingeschaltet ist und der Dunstabzug 21 im Normalbetrieb läuft. Ist dagegen nur der Axial-Lüfter 12 in Betrieb, reicht Druck in den beiden zweiten Räumen 20a und 20b nicht aus, um die Verschlussklappen 5a und 5b aus ihrer Schließstellung entgegen der Schwerkraft nach oben in eine Offenstellung zu bewegen. Eine entsprechende elektrische Ansteuerung und Bewegung der Verschlussklappen 5a, 5b ist damit überflüssig, da die Verschlussklappen 5a, 5b auch ohne elektrischen Antrieb, nur durch ihr Gewicht bedingt, während des Normalbetriebs geöffnet und während der Regeneration geschlossen sind.

Bei der Darstellung nach Fig. 5 entspricht die Schnittebene derjenigen aus der Darstellung nach Fig. 3, jedoch weist die Ansicht in die entgegengesetzte Richtung. Es ist deshalb die Innenwand 7 des Verbindungskanals 11 sichtbar, der sich in der Darstellung nach Fig. 2 an der linken Seite des Gehäuses 2 befindet. Wie bereits oben erwähnt, sind die Verschlussklappen 5a und 5b identisch ausgebildet. Auf diese Weise muss nur ein Klappentyp produziert werden und auch die Montage vereinfacht sich entsprechend. An beiden Schmalseiten der Verschlussklappen 5 sind im 90°-Winkel Seitenteile 9 angebracht, die mit Durchbrüchen 10 versehen sind.

In der Detaildarstellung nach Fig. 5 wurde die geschlossene Verschlussklappe 5b mit dem Seitenteil 9 entfernt, so dass der Blick auf den Bereich der Innenwand 7 frei wird, der ansonsten hinter dem Seitenteil 9 liegt. Es wird dadurch die Öffnung 8 sichtbar, die die Verbindung zwischen dem zweiten Raum 20 und dem Verbindungskanal 11 bildet. Durch die Anordnung des Durchbruchs 10 in dem Seitenteil 9 ist gewährleistet, dass die Öffnungen 8 nur offen sind, wenn die Verschlussklappen 5 geschlossen sind.

Das bedeutet, dass im Normalbetrieb bei offenen Verschlussklappen 5 die Öffnungen 8 zwischen Verbindungskanal 11 und zweitem Raum 20 verschlossen sind, so dass keine Abluft aus dem ersten Raum 19 über den Verbindungskanal 11 an dem Filter 16 vorbei in den Raum 20 gelangen kann. Damit wird verhindert, dass ungefilterte, mit Geruchsstoffen belastete Abluft während des Normalbetriebs über die Abluftabfuhr 3 wieder in den Raum zurück strömt.

Die in Fig. 6 gezeigte Schnittansicht vermittelt insbesondere den genauen Aufbau des Filters 16. Das Filtermaterial 18 ist in einer gitterartigen Stützstruktur 17 untergebracht, die den Filter 16 so stabilisiert, dass er sich während des Normalbetriebs des Dunstabzugs 21 auch bei hoher Leistungsstufe des Hauptgebläses 22 nicht verformt. Auch lässt sich in dieser Darstellung die Heizmanschette 15 erkennen, die sowohl den Katalysator 13 als auch die im Regenerationsbetrieb zirkulierende Luft und damit das Filtermaterial 18 erwärmt.

Im Folgenden soll nun die Funktion der erfindungsgemäßen Vorrichtung und des erfindungsgemäßen Verfahrens anhand eines bevorzugten Ausführungsbeispiels beschrieben werden.

Während des Normalbetriebs des Dunstabzugs 21 fördert das Hauptgebläse 22 Abluft aus dem Raum unterhalb des Dunstabzugs 21 über die Abluftzufuhr 4 in den ersten Raum 19 des Geruchsfilters 1, der in Strömungsrichtung der Abluft vor dem Filter 16 angeordnet ist. Der durch das Hauptgebläse 22 erzeugte Überdruck drückt die Abluft aus dem ersten Raum 19 durch den Filter 16 in die beiden zweiten Räume 20a und 20b, so dass auch dort ein Überdruck erzeugt wird.

Dieser Überdruck bewirkt eine Öffnungskraft auf die Verschlussklappen 5a und 5b, die ihre Schließkraft übersteigt. Die Verschlussklappen bewegen sich folglich in ihre Offenstellung. Dabei verschließen die Seitenteile 9 der Verschlussklappen 5 die Öffnungen 8 in der Innenwand 7, so dass keine ungefilterte Abluft in die beiden zweiten Räume 20a und 20b gelangen kann.

Während des Normalbetriebs durchströmt die Abluft den Filter 16, wobei der Abluft die Geruchsstoffe entzogen und von dem Filtermaterial 18 adsorbiert werden. Dabei wird das Filtermaterial 18 immer weiter mit Geruchsstoffen beladen.

In der Steuerung 23 ist ein Modell hinterlegt, welches beinhaltet, wie viele Volumeneinheiten Abluft gefiltert werden können, ohne dass Geruchsstoffe, die nicht mehr adsorbiert werden können, den Filter an seiner Austrittsseite wieder verlassen. In der Steuerung ist ebenfalls ein Zähler vorgesehen, der über die Betriebszeit die von dem Hauptgebläse geförderten Volumeneinheiten aufsummiert. Dabei werden auch die verschiedenen Leistungsstufen berücksichtigt, mit denen das Hauptgebläse 22 betrieben werden kann.

Ist auf Basis des gespeicherten Modells die Sättigung des Filters 16 fast erreicht, wartet die Steuerung 23, bis ein ebenfalls voreingestellter Zeitpunkt, z. B. 02:00 Uhr nachts, erreicht wird. Zu diesem Zeitpunkt wird nun überprüft, ob der Dunstabzug 21 gerade in Betrieb ist. Ist dies nicht der Fall, wird die Regeneration des Filters 16 gestartet.

Ist der Dunstabzug 21 jedoch gerade in Betrieb, wird mit dem Beginn der Regeneration gewartet, bis der Betrieb beendet wird. Sollte dies nicht bis zu einem ebenfalls voreingestellten Zeitpunkt, beispielsweise 05:00 Uhr nachts, geschehen, wird die Regeneration um 24 Stunden verschoben und gewartet, bis der voreingestellte Zeitpunkt für den Beginn der Regeneration erneut erreicht ist.

Wenn die Regeneration begonnen wird, werden der Axial-Lüfter 12 und die Heizmanschette 15 von der Steuerung 23 in Betrieb genommen. In dem in der Steuerung gespeicherten Modell ist ebenfalls berücksichtigt, wie lange der Axial-Lüfter 12 betrieben werden muss, um einen bestimmten Teil des Filters zu regenerieren, so dass zu jedem Zeitpunkt während der Regeneration die noch notwendige Regenerationszeit und damit der aktuelle Beladungszustand des Filters 16 bekannt sind. Es ist zu berücksichtigen, dass es sich bei dem Fortschritt der Regeneration des Filters nicht um eine lineare Funktion handelt, da der Katalysator erst seine Arbeitstemperatur erreichen muss. Auch die im Kreislauf geförderte Luft muss erst die Temperatur erreichen, die für die Desorption der Geruchsstoffe notwendig ist. Dieser nicht lineare Verlauf der Regeneration muss auch bei einer Unterbrechung der Regeneration und der darauf folgenden Wiederaufnahme berücksichtigt werden.

Während der Regeneration wird Luft von dem Axial-Lüfter 12 aus den zweiten Räumen 20a und 20b entzogen und über den Katalysator 13 dem ersten Raum 19 zugeführt. Dabei entsteht über dem Filter 16 ein leichter Unterdruck. Es ist folglich keine Kraft vorhanden, die die Verschlussklappen 5 entgegen der ausgeübten Schließkraft in ihre Offenstellung bewegen könnte. Die Verschlussklappen 5 bleiben daher während der Regeneration geschlossen. In geschlossenem Zustand der Verschlussklappen 5 decken sich die Durchbrüche 10 in den Seitenteilen 9 mit den Öffnungen 8 der Innenwand 7, so dass eine offene Verbindung zwischen dem Verbindungskanal 11 und den zweiten Räumen 20a und 20b besteht. Die von dem Axial-Lüfter 12 bewegte Luft zirkuliert folglich durch den Filter 16 und den Verbindungskanal 11.

Dabei durchströmt die zirkulierende Luft auch den Katalysator 13. Dort wird die Luft über die Heizmanschette 15 erwärmt. Während ihrer Zirkulation durch den Regenerationskreislauf wird die Luft immer weiter erhitzt und erwärmt bei dem Durchtritt durch den Filter 16 auch das Filtermaterial 18. Mit steigender Temperatur des Filtermaterials werden immer mehr Geruchsstoffe desorbiert. Die durch den Verbindungskanal strömende Luft ist folglich immer mehr mit desorbierten Geruchsstoffen beladen. Beim Durchströmen des heißen Katalysators werden diese Geruchsstoffe zerstört, so dass die aus dem Katalysator 13 in den ersten Raum 19 eintretende Luft wieder frei von Geruchsstoffen ist. Mit fortschreitender Regenerationsdauer reduziert sich die Beladung der Luft in dem Verbindungskanal dann wieder, bis der Filter keine Geruchsstoffe mehr abgibt.

Die Regeneration wird beendet, wenn - entsprechend dem hinterlegten Modell - der Filter 16 vollständig regeneriert und alle adsorbierten Geruchsstoffe desorbiert und in dem Katalysator 13 zerstört wurden. Zu diesem Zeitpunkt werden von der Steuerung 23 sowohl der Axial-Lüfter 12 als auch die Heizmanschette 15 abgeschaltet.

Wird während der Regeneration der Dunstabzug 21 in Betrieb genommen, wird die Regeneration sofort beendet. Da der integrierte Zähler während der Regeneration rückwärts zählt, sind die dem hinterlegten Modell entsprechende restliche Regenerationszeit sowie der aktuelle Beladungszustand des Filters 16 bekannt. Die nächste Regeneration wird gestartet sobald der Zähler wieder den dafür vorgesehenen Stand erreicht.

Die Erfindung ermöglicht somit eine sehr hohe Lebensdauer des verwendeten Filters, ohne dass sich die Filterwirkung verschlechtert. Es können auf diese Weise viele der Filterwechsel eingespart werden, die ohne Regeneration notwendig geworden wären.

In dem gezeigten Ausführungsbeispiel ist der Katalysator unterhalb des Filterdaches in dem ersten Raum untergebracht. Es ist aber ebenso möglich, den Katalysator außerhalb des ersten und des zweiten Raumes unterzubringen. Der Katalysator müsste zu diesem Zweck über jeweils einen Verbindungskanal sowohl mit dem ersten als auch mit dem zweiten Raum in Verbindung stehen. Auf diese Weise könnte ein Nachrüstmodul für eine bestehende Umlufthaube realisiert werden.

### Bezugszeichenliste:

- 1: Geruchsfilter
- 2: Gehäuse
- 3: Abluftabfuhr
- 4: Abluftzufuhr
- 5: Verschlussklappen
- 6: Scharniere
- 7: Innenwand des Verbindungskanals
- 8: Öffnungen des Verbindungskanals
- 9: Seitenteile der Verschlussklappen
- 10: Öffnungen der Seitenteile
- 11: Verbindungskanal
- 12: Axial-Lüfter
- 13: Katalysator
- 14: Katalysatorrohr
- 15: Heizmanschette
- 16: Filter
- 17: Stützstruktur
- 18: Filtermaterial
- 19: erster Raum
- 20: zweiter Raum
- 21: Dunstabzug
- 22: Hauptgebläse
- 23: Steuerung

## Patentansprüche

1. Vorrichtung zur Beseitigung von Gerüchen aus der Abluft einer Abluftquelle mit einem Filtergehäuse (2), welches eine Abluftzufuhr (4) und eine Abluftabfuhr (3) aufweist, und mit einem Filter (16), der das Filtergehäuse (2) in wenigstens einen ersten Raum (19) in Strömungsrichtung der Abluft vor dem Filter (16) und wenigstens einen zweiten Raum (20) nach dem Filter (16) unterteilt, **gekennzeichnet durch**
einen Katalysator (13),
wenigstens einen Verbindungskanal (11), über den der Katalysator (13) mit einem der Räume (19; 20) in Verbindung steht,
eine Gasfördereinrichtung (12), über die ein geschlossener Luftkreislauf aufbaubar ist, in den der Filter (16), die beiden Räume (19, 20) auf beiden Seiten des Filters (16), der wenigstens eine Verbindungskanal (11) und der Katalysator (13) eingebunden sind, und
eine Steuerung (23), mit der die Gasfördereinrichtung (12) ansteuerbar ist.

2. Vorrichtung nach Anspruch 1, **dadurch gekennzeichnet, dass** eine Heizung (15) vorgesehen ist, die durch die Steuerung (23) ansteuerbar ist.

3. Vorrichtung nach einem der Ansprüche 1 bis 2, **dadurch gekennzeichnet, dass** ein Verschluss (5) für die Abluftabfuhr (3) vorgesehen ist.

4. Vorrichtung nach Anspruch 3, **dadurch gekennzeichnet, dass** der Verschluss (5) durch die Steuerung (23) ansteuerbar ist.

5. Vorrichtung nach einem der Ansprüche 1 bis 4, **dadurch gekennzeichnet, dass** der Filter (16) in Form eines Satteldachs aufgebaut ist, wobei der wenigstens eine erste Raum (19) unter dem Dach und der wenigstens eine zweite Raum (20) über dem Dach angeordnet ist und dass der Katalysator (13) in dem wenigstens einen ersten Raum (19) unter dem Dach vorgesehen ist.

6. Vorrichtung nach einem der Ansprüche 1 bis 5, **dadurch gekennzeichnet, dass** der Katalysator (13) in einem Rohr (14) untergebracht ist.

7. Vorrichtung nach einem der Ansprüche 2 bis 6, **dadurch gekennzeichnet, dass** die Heizung als Heizmanschette (15) ausgebildet ist, die um den Katalysator (13) gelegt ist, wobei der Katalysator (13) insbesondere auf 100-250°C aufheizbar ist.

8. Vorrichtung nach einem der Ansprüche 1 bis 7, **dadurch gekennzeichnet, dass** die Gasfördereinrichtung (12) zwischen dem Katalysator (13) und dem Verbindungskanal (11) vorgesehen ist.

9. Vorrichtung nach einem der Ansprüche 1 bis 8, **dadurch gekennzeichnet, dass** der Filter (16) Aktivkohle enthält.

10. Verfahren zur Beseitigung von Gerüchen aus der Abluft einer Abluftquelle, bei dem die Abluft aus wenigstens einem ersten Raum (19) durch einen Filter (16) in wenigstens einen zweiten Raum (20) geführt wird, **dadurch gekennzeichnet, dass** der Filter (16) über einen geschlossenen Kreislauf regeneriert wird, bei dem Luft, die auf insbesondere 50-70°C aufgeheizt ist, aus wenigstens einem Raum (19; 20) auf einer Seite des Filters (16) durch den Filter (16) hindurch in den wenigstens einen Raum (19; 20) auf der anderen Seite des Filters (16) und über wenigstens einen Verbindungskanal (11) zwischen den beiden Räumen (19; 20) wieder zurück gefördert wird, wobei die Luft über einen Katalysator (13) geführt wird, der insbesondere auf einer Temperatur zwischen 100°C und 250°C gehalten wird.

11. Verfahren nach Anspruch 10, **dadurch gekennzeichnet, dass** zur Regeneration des Filters (16) Luft aus dem wenigstens einen ersten Raum (19) über den wenigstens einen Verbindungskanal (11) in den wenigstens einen zweiten Raum (20) abgezogen und durch den Filter (16) dem wenigstens einen ersten Raum (19) wieder zugeführt wird.

12. Verfahren nach Anspruch 10, **dadurch gekennzeichnet, dass** zur Regeneration des Filters (16) Luft aus dem wenigstens einen zweiten Raum (20) über den wenigstens einen Verbindungskanal (11) in den wenigstens einen ersten Raum (19) abgezogen und durch den Filter (16) dem wenigstens einen zweiten Raum (20) wieder zugeführt wird.

13. Verfahren nach einem der Ansprüche 10 bis 12, **dadurch gekennzeichnet, dass** der Kreislauf zur Regeneration des Filters (16) nur dann angesteuert wird, wenn keine Gerüche aus der Abluft einer Abluftquelle entfernt werden.

14. Verfahren nach einem der Ansprüche 10 bis 13, **dadurch gekennzeichnet, dass** der Kreislauf zur Regeneration des Filters (16) dann angesteuert wird, wenn ein bestimmtes Volumen der Abluft einer Abluftquelle gefiltert wurde.

15. Verfahren nach einem der Ansprüche 10 bis 14, **dadurch gekennzeichnet, dass** ein bereits begonnener Kreislauf zur Regeneration des Filters (16) unterbrochen wird, wenn Gerüche aus der Abluft einer Abluftquelle entfernt werden.
